# EUROPEAN PATENT APPLICATION

(11) **EP 4 099 745 A1**
(43) Date of publication of application: **07.12.2022**
(21) Application number: 20916807.9
(22) Date of filing: 30.01.2020
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); KAKISHIMA, Yuichi, Tokyo 100-6150 (JP); NAGATA, Satoshi, Tokyo 100-6150 (JP)
(74) Representative: Hoffmann Eitle
(86) International application number: PCT/JP2020/003541
(87) International publication number: WO 2021/152796

(57) **Abstract**

A terminal according to one aspect of the present disclosure includes a receiving section that receives a medium access control-control element (MAC CE) to update a transmission configuration indication (TCI) state, and a control section that, when a configuration related to at least one of a spatial relation and a pathloss reference signal for a specific uplink signal satisfies an application condition, uses the TCI state for the pathloss reference signal from timing after transmission of a positive acknowledgment (ACK) to the MAC CE. According to one aspect of the present disclosure, it is possible to appropriately transmit a UL signal.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is under study that, for future radio communication systems (for example, NR), a user terminal (terminal, User Equipment (UE)) controls transmission/reception processing on the basis of information related to quasi-co-location (QCL) and uses a pathloss reference signal (PL-RS) for pathloss calculation for uplink (UL) transmit power control.

However, from when to use which PL-RS is indefinite. Unless the UE uses the PL-RS appropriately, the UE may fail to appropriately transmit a UL signal, and thus system performance degradation, such as throughput reduction, may occur.

Thus, an object of the present disclosure is to provide a terminal, a radio communication method, and a base station that appropriately transmit a UL signal.

### Solution to Problem

A terminal according to one aspect of the present disclosure includes a receiving section that receives a medium access control-control element (MAC CE) to update a transmission configuration indication (TCI) state, and a control section that, when a configuration related to at least one of a spatial relation and a pathloss reference signal for a specific uplink signal satisfies an application condition, uses the TCI state for the pathloss reference signal from timing after transmission of a positive acknowledgment (ACK) to the MAC CE. Advantageous Effects of Invention

According to one aspect of the present disclosure, it is possible to appropriately transmit a UL signal.

### Brief Description of Drawings

FIG. 1 is a diagram to show an example of measurement delay requirements in intra-frequency measurement;
FIGS. 2A and 2B are diagrams to show an example of the number of samples in L1-RSRP measurement and a scaling factor with consideration of UE receive beam switching;
FIGS. 3A and 3B are each a diagram to show an example of an L1-RSRP measurement period based on an SSB;
FIGS. 4A and 4B are each a diagram to show an example of an L1-RSRP measurement period based on a CSI-RS;
FIG. 5 is a diagram to show an example of an update of a spatial relation in Rel. 15;
FIG. 6 is a diagram to show an example of an update of a PL-RS in Rel. 16;
FIG. 7 is a diagram to show an example of a PL-RS application timeline according to Embodiment 1;
FIG. 8 is a diagram to show an example of a PL-RS application timeline according to Embodiment 4;
FIG. 9 is a diagram to show an example of a possible QCL configuration;
FIG. 10 is a diagram to show an example of an impractical QCL configuration;
FIG. 11 is a diagram to show an example of a schematic structure of a radio communication system according to one embodiment;
FIG. 12 is a diagram to show an example of a structure of a base station according to one embodiment;
FIG. 13 is a diagram to show an example of a structure of a user terminal according to one embodiment; and
FIG. 14 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (represented as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay, and
- QCL type D (QCL-D): Spatial reception parameter.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a sounding reference signal (SRS), a tracking CSI-RS (also referred to as a Tracking Reference Signal (TRS)), and a QCL detection reference signal (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

The UE may receive configuration information (for example, PDSCH-Config or tci-StatesToAddModList) including a list of information elements of the TCI state, by using higher layer signaling.

An information element of the TCI state ("TCI-state IE" of RRC) configured using the higher layer signaling may include a TCI state ID and one or a plurality of pieces of QCL information ("QCL-Info"). The QCL information may include at least one of information (RS relation information) related to the RS to have a QCL relationship and information (QCL type information) indicating a QCL type. The RS relation information may include information such as an index of the RS (for example, an SSB index or a non-zero power CSI-RS (NZP CSI-RS) resource ID (Identifier)), an index of a cell in which the RS is located, and an index of a Bandwidth Part (BWP) in which the RS is located.

In Rel. 15 NR, as the TCI state for at least one of the PDCCH and PDSCH, both an RS of QCL type A and an RS of QCL type D or only the RS of QCL type A can be configured for the UE.

When the TRS is configured as the RS of QCL type A, it is assumed that the TRS is different from a demodulation reference signal (DMRS) for the PDCCH or PDSCH and the same TRS is periodically transmitted for a long time. The UE measures the TRS and can thereby calculate average delay, delay spread, and the like.

The UE for which the TRS as the RS of QCL type A has been configured with respect to a TCI state for the DMRS for the PDCCH or PDSCH can assume that parameters of QCL type A (average delay, delay spread, and the like) for the DMRS for the PDCCH or PDSCH and for the TRS are the same, and thus can obtain parameters of type A (average delay, delay spread, and the like) for the DMRS for the PDCCH or PDSCH on the basis of a measurement result of the TRS. When performing a channel estimation of at least one of the PDCCH and PDSCH, the UE can perform the channel estimation with higher accuracy by using the measurement result of the TRS.

The UE for which the RS of QCL type D has been configured can determine a UE receive beam (spatial domain reception filter or UE spatial domain reception filter) by using the RS of QCL type D.

An RS of QCL type X in a TCI state may mean an RS being in a QCL type X relationship with a certain channel/signal (for the DMRS), and this RS may be referred to as a QCL source of QCL type X in the TCI state.

### <TCI State for PDCCH>

Information related to QCL between a PDCCH (or a DMRS antenna port related to the PDCCH) and a certain RS may be referred to as a TCI state for the PDCCH and so on.

The UE may judge a TCI state for a UE-specific PDCCH (CORESET) on the basis of higher layer signaling. For example, one or a plurality of (K) TCI states may be configured for the UE by RRC signaling for each

### CORESET.

One of the plurality of the TCI states configured by the RRC signaling may be activated by a MAC CE for the UE for each CORESET. The MAC CE may be referred to as a TCI state indication MAC CE for a UE-specific PDCCH (TCI State Indication for UE-specific PDCCH MAC CE). The UE may perform monitoring of a CORESET on the basis of an active TCI state corresponding to the CORESET.

### <TCI State for PDSCH>

Information related to QCL between a PDSCH (or a DMRS antenna port related to the PDSCH) and a certain DL-RS may be referred to as a TCI state for the PDSCH and so on.

The UE may be notified of (configured with) M (M ≥ 1) TCI states for the PDSCH (M pieces of QCL information for the PDSCH) by higher layer signaling. Note that the number M of the TCI states configured for the UE may be limited by at least one of a UE capability and a QCL type.

DCI used for scheduling of the PDSCH may include a field indicating a TCI state for the PDSCH (which may be referred to as, for example, a TCI field, a TCI state field, and so on). The DCI may be used for scheduling of a PDSCH in one cell, and may be referred to as, for example, DL DCI, DL assignment, DCI format 1_0, DCI format 1_1, and so on.

Whether the TCI field is included in the DCI may be controlled by information of which the UE is notified from a base station. The information may be information (for example, TCI presence information, TCI presence information in DCI, or a higher layer parameter TCI-PresentInDCI) indicating whether the TCI field is present or absent in the DCI. For example, the information may be configured for the UE by higher layer signaling.

When more than eight kinds of TCI states are configured for the UE, eight or less kinds of TCI states may be activated (or designated) with use of a MAC CE. The MAC CE may be referred to as a TCI state activation/deactivation MAC CE for a UE-specific PDSCH (TCI States Activation/Deactivation for UE-specific PDSCH MAC CE). A value of the TCI field in the DCI may indicate one of the TCI states activated by the MAC CE.

When the TCI presence information set to "enabled" for a CORESET to schedule the PDSCH (CORESET used for PDCCH transmission to schedule the PDSCH) is configured for the UE, the UE may assume that the TCI field is present in DCI format 1_1 for a PDCCH transmitted on the CORESET.

In a case where the TCI presence information is not configured for a CORESET to schedule a PDSCH or the PDSCH is scheduled by DCI format 1_0, when time offset between reception of DL DCI (DCI to schedule the PDSCH) and reception of a PDSCH corresponding to the DCI is equal to or greater than a threshold value, the UE may assume that a TCI state or QCL assumption for the PDSCH is, for determination of QCL of a PDSCH antenna port, identical to a TCI state or QCL assumption applied to a CORESET used for PDCCH transmission to schedule the PDSCH.

In a case where the TCI presence information is set to "enabled," when a TCI field in DCI in a component carrier (CC) to schedule (a PDSCH) indicates an activated TCI state in a CC or DL BWP to be scheduled and the PDSCH is scheduled by DCI format 1_1, the UE may use, for determination of QCL of the PDSCH antenna port, a TCI according to a TCI field value in a detected PDCCH having the DCI. When time offset between reception of DL DCI (to schedule the PDSCH) and reception of a PDSCH corresponding to the DCI (PDSCH scheduled by the DCI) is equal to or greater than a threshold value, the UE may assume that a DM-RS port for a PDSCH of a serving cell is QCLed with an RS in a TCI state related to a QCL type parameter given by an indicated TCI state.

When a single-slot PDSCH is configured for the UE, the indicated TCI state may be based on an activated TCI state in a slot having the scheduled PDSCH. When a multi-slot PDSCH is configured for the UE, the indicated TCI state may be based on an activated TCI state in the first slot having the scheduled PDSCH, and the UE may expect that the indicated TCI state is identical through slots having the scheduled PDSCH. In a case where a CORESET associated with a search space set for cross-carrier scheduling is configured for the UE, when TCI presence information is set to "enabled" for the UE with respect to the CORESET and at least one of TCI states configured for a serving cell scheduled by the search space set includes QCL type D, the UE may assume that time offset between a detected PDCCH and a PDSCH corresponding to the PDCCH is equal to or greater than a threshold value.

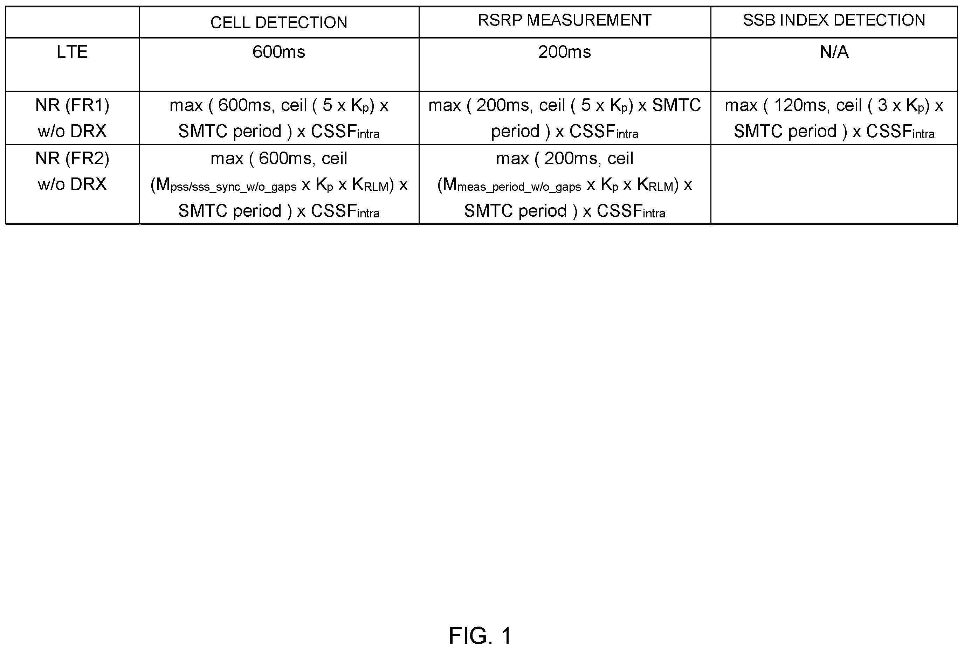

In both a case where TCI information in DCI (higher layer parameter TCI-PresentInDCI) is set to "enabled" in an RRC connected mode and a case where the TCI information in DCI is not configured in the RRC connected mode, when time offset between reception of DL DCI (DCI to schedule a PDSCH) and reception of a corresponding PDSCH (PDSCH scheduled by the DCI) is less than a threshold value, the UE may assume that the DM-RS port for the PDSCH in the serving cell has the smallest (lowest) CORESET-ID in the most recent (latest) slot in which one or more CORESETs in an active BWP for the serving cell are monitored by the UE and the DM-RS port is QCLed with an RS related to a QCL parameter used for QCL indication of a PDCCH for a CORESET associated with a monitored search space (FIG. 1). This RS may be referred to as a default TCI state for the PDSCH or default QCL assumption for the PDSCH.

The time offset between reception of DL DCI and reception of a PDSCH corresponding to the DCI may be referred to as scheduling offset.

The above-described threshold value may be referred to as a time duration for QCL, "timeDurationForQCL," "Threshold," "Threshold for offset between a DCI indicating a TCI state and a PDSCH scheduled by the DCI," "Threshold-Sched-Offset," a schedule offset threshold value, a scheduling offset threshold value, and so on.

The time duration for QCL may be based on a UE capability, and may be based on, for example, a delay in PDCCH decoding and beam switching. The time duration for QCL may be a minimum time required for the UE to perform PDCCH reception and application of spatial QCL information received in DCI for PDSCH processing. The time duration for QCL may be represented by the number of symbols for each piece of subcarrier spacing, or may be represented by time (for example, µs). Information about the time duration for QCL may be reported, as UE capability information, to the base station from the UE, or may be configured for the UE with use of higher layer signaling from the base station.

For example, the UE may assume that a DMRS port for the above-described PDSCH is QCLed with a DL-RS based on a TCI state activated with respect to a CORESET corresponding to the above-described lowest CORESET-ID. The most recent slot may be, for example, a slot for receiving DCI to schedule the above-described PDSCH.

Note that the CORESET-ID may be an ID (ID for CORESET identification or controlResourceSetId) configured by an RRC information element "ControlResourceSet."

When no CORESET is configured for a CC, the default TCI state may be an activated TCI state capable of being applied to a PDSCH in an active DL BWP for the CC, the activated TCI state having the lowest ID.

In Rel. 16 or later versions, in a case where a PDSCH and a PDCCH to schedule the PDSCH each exist in a different component carrier (CC) (cross-carrier scheduling), when a PDCCH-to-PDSCH delay is shorter than the time duration for QCL or when a TCI state is absent in DCI for the scheduling, the UE may obtain a QCL assumption for the scheduled PDSCH based on an active TCI state capable of being applied to a PDSCH in an active BWP for the scheduled cell, the active TCI state having the lowest ID.

### <Spatial Relation for PUCCH>

A parameter (PUCCH configuration information or PUCCH-Config) used for PUCCH transmission may be configured for the UE by higher layer signaling (for example, Radio Resource Control (RRC) signaling). The PUCCH configuration information may be configured for each partial band (for example, uplink bandwidth part (BWP)) in a carrier (also referred to as a cell or a component carrier (CC)).

The PUCCH configuration information may include a list of pieces of PUCCH resource set information (for example, PUCCH-ResourceSet) and a list of pieces of PUCCH spatial relation information (for example, PUCCH-SpatialRelationInfo).

The PUCCH resource set information may include a list (for example, resourceList) of PUCCH resource indices (IDs, for example, PUCCH-ResourceId) .

When the UE does not have dedicated PUCCH resource configuration information (for example, dedicated PUCCH resource configuration) provided by PUCCH resource set information in the PUCCH configuration information (before RRC setup), the UE may determine a PUCCH resource set on the basis of a parameter (for example, pucch-ResourceCommon) in system information (for example, System Information Block Type1 (SIB1) or Remaining Minimum System Information (RMSI)). The PUCCH resource set may include 16 PUCCH resources.

On the other hand, when the UE has the above-described dedicated PUCCH resource configuration information (UE-dedicated uplink control channel configuration or dedicated PUCCH resource configuration) (after RRC set up), the UE may determine the PUCCH resource set in accordance with the number of UCI information bits.

The UE may determine one PUCCH resource (index) in the above-described PUCCH resource set (for example, a PUCCH resource set to be determined in a cell-specific or UE-dedicated manner) on the basis of at least one of a value of a field (for example, a PUCCH resource indicator field) in downlink control information (DCI) (for example, DCI format 1_0 or 1_1 used for scheduling of a PDSCH), the number of CCEs (N_{CCE}) in a control resource set (COntrol REsource SET (CORESET)) for PDCCH reception to deliver the DCI, and the leading (first) CCE index (n_{CCE,0}) for the PDCCH reception.

The PUCCH spatial relation information (for example, an RRC information element "PUCCH-spatialRelationInfo") may indicate a plurality of candidate beams (spatial domain filters) for PUCCH transmission. The PUCCH spatial relation information may indicate a spatial association between an RS (Reference signal) and the PUCCH.

The list of pieces of PUCCH spatial relation information may include some elements (PUCCH spatial relation information IEs (Information Elements)). Each piece of the PUCCH spatial relation information may include, for example, at least one of a PUCCH spatial relation information index (ID, for example, pucch-SpatialRelationInfoId), a serving cell index (ID, for example, servingCellId), and information related to an RS (reference RS) being in a spatial relation with the PUCCH.

For example, the information related to the RS may be an SSB index, a CSI-RS index (for example, an NZP-CSI-RS resource configuration ID), or an SRS resource ID and BWP ID. The SSB index, the CSI-RS index, and the SRS resource ID may be associated with at least one of a beam, a resource, and a port selected depending on measurement of a corresponding RS.

When more than one piece of spatial relation information related to the PUCCH is configured, the UE may perform control, on the basis of a PUCCH spatial relation activation/deactivation MAC CE, so that one piece of PUCCH spatial relation information is active for one PUCCH resource in a certain time.

A PUCCH spatial relation activation/deactivation MAC CE of Rel-15 NR is represented by a total of 3 octets (8 bits × 3 = 24 bits) of octets (Octs) 1 to 3.

The MAC CE may include information about a serving cell ID ("Serving Cell ID" field), a BWP ID ("BWP ID" field), a PUCCH resource ID ("PUCCH Resource ID" field), or the like of a target for application.

The MAC CE also includes "Sᵢ" (i = 0 to 7) fields. The UE activates spatial relation information with spatial relation information ID #i when a certain Sᵢ field indicates 1. The UE deactivates the spatial relation information with spatial relation information ID #i when the certain Sᵢ field indicates 0.

After 3 ms from transmitting a positive acknowledgment (ACK) to a MAC CE to activate PUCCH spatial relation information, the UE may activate PUCCH relation information designated by the MAC CE.

### <Spatial Relation for SRS and PUSCH>

The UE may receive information (SRS configuration information, for example, a parameter in an RRC control element "SRS-Config") used for transmission of a reference signal for measurement (for example, a sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to some SRS resources (some SRS resources may be grouped together). Each SRS resource may be identified by an SRS resource identifier (SRS Resource Indicator (SRI)) or an SRS resource ID (Identifier).

The SRS resource set information may include an SRS resource set ID (SRS-ResourceSetId), a list of SRS resource IDs (SRS-ResourceId) used in the resource set, an SRS resource type, or information about SRS usage.

Here, the SRS resource type may indicate any one of a periodic SRS (P-SRS), a semi-persistent SRS (SP-SRS), and an aperiodic SRS (A-SRS or AP-SRS). Note that the UE may periodically (or, after activation, periodically) transmit the P-SRS and SP-SRS, and may transmit the A-SRS on the basis of an SRS request from DCI.

The usage (an RRC parameter "usage" or an L1 (Layer-1) parameter "SRS-SetUse") may be, for example, beam management (beamManagement), codebook-based transmission (codebook (CB)), non-codebook-based transmission (nonCodebook (NCB)), antenna switching (antennaSwitching), or the like. An SRS for codebook-based transmission or non-codebook-based transmission usage may be used for determination of a precoder for codebook-based or non-codebook-based PUSCH transmission based on the SRI.

For example, in a case of codebook-based transmission, the UE may determine the precoder for the PUSCH transmission on the basis of the SRI, a transmitted rank indicator (TRI), and a transmitted precoding matrix indicator (TPMI). In a case of non-codebook-based transmission, the UE may determine the precoder for the PUSCH transmission on the basis of the SRI.

The SRS resource information may include an SRS resource ID (SRS-ResourceId), the number of SRS ports, an SRS port number, a transmission Comb, SRS resource mapping (for example, time and/or frequency resource location, resource offset, a resource periodicity, the number of repetitions, the number of SRS symbols, SRS bandwidth, or the like), hopping-related information, an SRS resource type, a sequence ID, an SRS spatial relation information, or the like.

The SRS spatial relation information (for example, an RRC information element "spatialRelationInfo") may indicate information about a spatial relation between a certain reference signal and an SRS. The reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the above-described reference signal, at least one of an SSB index, a CSI-RS resource ID, and an SRS resource ID.

Note that in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may also be interchangeably interpreted. An SRS index, an SRS resource ID, and an SRI may be interchangeably interpreted.

The SRS spatial relation information may include a serving cell index, a BWP index (BWP ID), or the like corresponding to the above-described reference signal.

In NR, uplink signal transmission may be controlled on the basis of the presence or absence of beam correspondence (BC). The BC may be, for example, a capability of a certain node (for example, the base station or UE) to determine a beam (transmit beam or Tx beam) used for signal transmission on the basis of a beam (receive beam or Rx beam) used for signal reception.

Note that the BC may be referred to as transmit/receive beam correspondence (Tx/Rx beam correspondence), beam reciprocity, beam calibration, calibrated/non-calibrated, reciprocity calibrated/non-calibrated, a level of correspondence, a level of coincidence, and so on.

For example, when the BC is absent, the UE may transmit an uplink signal (for example, a PUSCH, a PUCCH, an SRS, or the like) by using a beam (spatial domain transmission filter) identical to that for an SRS (or SRS resource) indicated from the base station on the basis of a measurement result of one or more SRSs (or SRS resources).

On the other hand, when the BC is present, the UE may transmit an uplink signal (for example, a PUSCH, a PUCCH, an SRS, or the like) by using a beam (spatial domain transmission filter) identical or corresponding to a beam (spatial domain reception filter) used for reception of an SSB or CSI-RS (or CSI-RS resources).

With respect to a certain SRS resource, when spatial relation information related to an SSB or CSI-RS and an SRS is configured (for example, when the BC is present), the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam for the SSB or CSI-RS and a UE transmit beam for the SRS are the same.

With respect to a certain SRS (target SRS) resource, when spatial relation information related to another SRS (reference SRS) and the SRS (target SRS) is configured (for example, when the BC is absent), the UE may transmit the target SRS resource by using the same spatial domain filter (spatial domain transmission filter) as a spatial domain filter (spatial domain transmission filter) for transmission of the reference SRS. That is, in this case, the UE may assume that a UE transmit beam for the reference SRS and a UE transmit beam for the target SRS are the same.

The UE may determine, on the basis of a value of a field (for example, an SRS resource identifier (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") about an SRS resource determined on the basis of the value of the field (for example, the SRI).

When codebook-based transmission is used for the PUSCH, two SRS resources may be configured for the UE by RRC, and one of the two SRS resources may be indicated for the UE by DCI (1-bit field). When non-codebook-based transmission is used for the PUSCH, four SRS resources may be configured for the UE by the RRC, and one of the four SRS resources may be indicated for the UE by DCI (2-bit field). RRC reconfiguration is necessary for using a spatial relation other than the two or four spatial relations configured by the RRC.

Note that a DL-RS is configurable for spatial relations for SRS resources used for the PUSCH. For example, with respect to SP-SRSs, spatial relations for a plurality of (for example, up to 16) SRS resources are configured for the UE by RRC, and one of the plurality of the SRS resources can be indicated for the UE by a MAC CE.

### (Pathloss RS)

A pathloss PL_{b,f,c}(q_{d}) [dB] in transmit power control for each of the PUSCH, PUCCH, and an SRS is calculated by the UE with use of an index q_{d} of a reference signal (RS or pathloss reference RS (PathlossReferenceRS)) for a downlink BWP associated with an active UL BWP b for a carrier f with a serving cell c. In the present disclosure, the pathloss reference RS, a pathloss (PL)-RS, the index q_{d}, an RS used for pathloss calculation, and an RS resource used for pathloss calculation may be interchangeably interpreted. In the present disclosure, calculation, estimation, measurement, and tracking (track) may be interchangeably interpreted.

Whether to change existing systems for a higher layer filtered RSRP for pathloss measurement when a pathloss RS is updated by a MAC CE is under study.

When the pathloss RS is updated by the MAC CE, pathloss measurement based on L1-RSRP may be applied. At available timing after the MAC CE for the update of the pathloss RS, the higher layer filtered RSRP may be used for the pathloss measurement, and the L1-RSRP may be used for the pathloss measurement before the higher layer filtered RSRP is applied. At the available timing after the MAC CE for the update of the pathloss RS, the higher layer filtered RSRP may be used for the pathloss measurement, and the higher layer filtered RSRP for the last pathloss RS may be used before the timing. Similarly to an operation of Rel. 15, the higher layer filtered RSRP may be used for the pathloss measurement, and the UE may track all pathloss RS candidates configured by RRC. A maximum number of pathloss RSs capable of being configured by the RRC may depend on a UE capability. When the maximum number of pathloss RSs capable of being configured by the RRC is X, X or less pathloss RS candidates may be configured by the RRC, and the pathloss RS may be selected by the MAC CE from the configured pathloss RS candidates. The maximum number of pathloss RSs capable of being configured by the RRC may be 4, 8, 16, 64, or the like.

In the present disclosure, the higher layer filtered RSRP, a filtered RSRP, and a Layer 3 filtered RSRP may be interchangeably interpreted.

### (Measurement Delay Requirements)

For radio resource management measurement (RRM) for Layer 3 (L3) mobility, measurement delay requirements for intra-frequency measurement are defined. As shown in FIG. 1, the measurement delay requirements are defined for each of cell detection, RSRP measurement, and SSB index detection.

Here, M_{pss/sss_sync_w/o_gaps} is 40 for the UE to support FR2 power class 1, is 24 for the UE to support power class 2, is 24 for the UE to support FR2 power class 3, and is 24 for the UE to support FR2 power class 4. M_{meas_period_w/o_gaps} is 40 for the UE to support power class 1, is 24 for the UE to support FR2 power class 2, is 24 for the UE to support power class 3, and is 24 for the UE to support power class 4. When an intra-frequency SSB measurement timing configuration (SMTC) does not fully overlap with a measurement gap (MG) or when the intra-frequency SMTC fully overlaps with the MG, Kₚ = 1. When the intra-frequency SMTC partially overlaps with the MG, with use of a measurement gap repetition period (MGRP), Kₚ = 1/(1-(SMTC period/MGRP) and SMTC period < MGRP. K_{RLM} (K_{layer1_measurement}) is 1 or 1.5 depending on a relationship between all reference signals and intra-frequency SMTC occasions configured for L1-RSRP for radio link monitoring (RLM), beam failure detection (BFD), candidate beam detection (CBD), or beam report outside the MG. CSSFᵢₙₜᵣₐ is a carrier-specific scaling factor.

When DRX is present and a DRX cycle is 320 ms or less, the inside of the ceil function is increased by 1.5 times in consideration of a DRX ON duration and miss-alignment of an SMTC window.

In LTE, measurement by a CRS is always possible, and thus the measurement delay requirements are 600 ms for cell detection and synchronization + 200 ms for RSRP measurement = a fixed value 800 ms. In NR, in view of UE power consumption reduction, in order to avoid unnecessarily frequent measurement, 600 ms for LTE cell detection and 200 ms for LTE RSRP measurement are defined as lower limit values. In NR, an SMTC periodicity is configurable, and thus the measurement delay requirements depending on the SMTC periodicity are applied.

### (L1-RSRP Measurement/Report)

The UE measures a value of Layer 1 (L1)-RSRP for each RS (each base station transmit beam) configured by RRC.

For each report of the L1-RSRP, a measurement period indicating the number of immediately preceding samples within which L1-RSRP measurement needs to be completed is defined. Let the number of samples used for RSRP measurement for one L1-RSRP report be M, let a scaling factor with consideration of overlap with an SMTC or measurement gap (MG) be P, let a scaling factor with consideration of UE receive beam switching be N, and let an SSB or CSI-RS transmission periodicity be RS transmission periodicity, a measurement period T in FR1 is expressed as M × P × RS transmission periodicity and the measurement period T in FR2 is expressed as M × N × P × RS transmission periodicity.

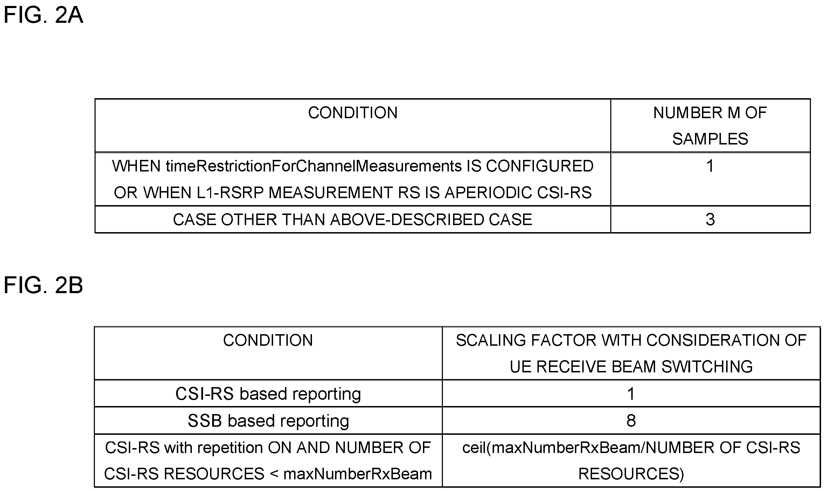

Here, as shown in FIG. 2A, when a time domain measurement restriction (timeRestrictionForChannelMeasurements) for channel (signal) measurement is configured or when an RS for the L1-RSRP measurement is an aperiodic CSI-RS, M = 1, otherwise M = 3. As shown in FIG. 2B, when the L1-RSRP report is based on a CSI-RS, N = 1, and when the L1-RSRP report is based on an SSB, N = 8, when the L1-RSRP report is based on a CSI-RS with repetition and the number of CSI-RS resources is less than a maximum number of receive beams (maxNumberRxBeam), N = ceil(maxNumberRxBeam/the number of CSI-RS resources).

L1-RSRP measurement accuracy based on 1-sample measurement is defined. The presence or absence of averaging of RSRP in L1 may depend on UE implementation. When the time domain measurement restriction for channel measurement is configured, the UE reports 1-sample RSRP as an L1-RSRP measurement result without using the averaging.

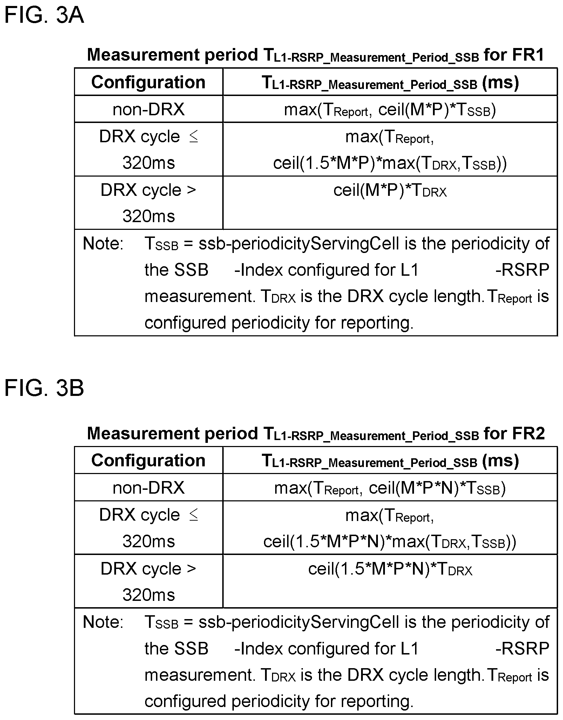

FIG. 3A shows an L1-RSRP measurement period T_{L1-RSRP_Measurement_Period_SSB} based on an SSB for FR1. FIG. 3B shows the L1-RSRP measurement period T_{L1-RSRP_Measurement_Period_SSB} based on an SSB for FR2. Here, T_{SSB} = ssb-periodicityServingCell is a periodicity of an SSB index configured for the L1-RSRP measurement. T_{DRX} is a DRX cycle length. T_{Report} is a periodicity configured for the report.

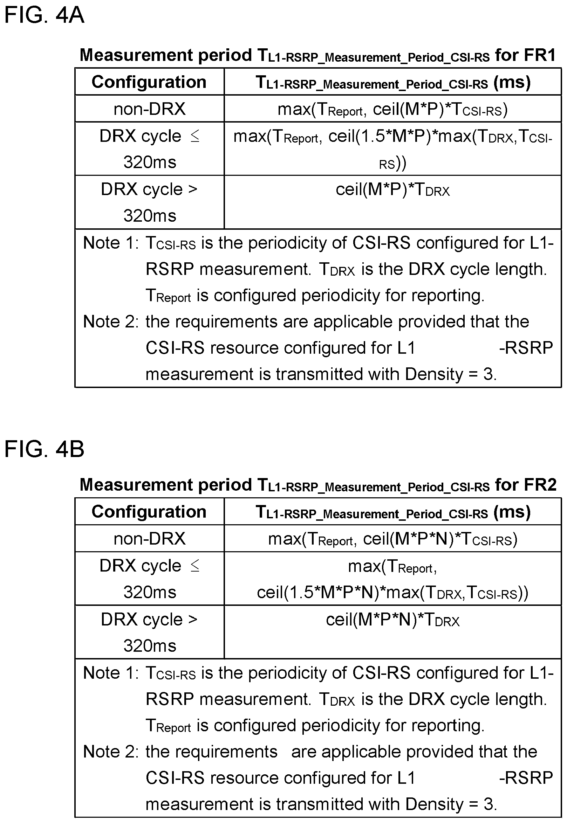

FIG. 4A shows an L1-RSRP measurement period T_{L1-RSRP_Measurement_Period_CSI-RS} based on a CSI-RS for FR1. FIG. 4B shows the L1-RSRP measurement period T_{L1-RSRP_Measurement_Period_CSI-RS} based on a CSI-RS for FR2. T_{CSI-RS} is a periodicity of a CSI-RS configured for the L1-RSRP measurement. This requirement is applicable to a case where the CSI-RS configured for the L1-RSRP measurement is transmitted with Density = 3.

### (Default Spatial Relation and Default PL-RS)

In Rel. 15, each MAC CE of a MAC CE for PUCCH spatial relation activation/deactivation and a MAC CE for SRS spatial relation activation/deactivation is necessary. A PUSCH spatial relation is in accordance with the SRS spatial relation.

In Rel. 16, at least one of the MAC CE for PUCCH spatial relation activation/deactivation and the MAC CE for SRS spatial relation activation/deactivation may not necessarily be used.

When both a spatial relation and a PL-RS for the PUCCH are not configured in FR2, a default assumption for the spatial relation and PL-RS (default spatial relation and default PL-RS) is applied to the PUCCH. When both a spatial relation and a PL-RS for the SRS are not configured in FR2, a default assumption for the spatial relation and PL-RS (default spatial relation and default PL-RS) is applied to a PUSCH scheduled by DCI format 0_1 and the SRS.

When CORESETs are configured for an active DL BWP on a CC, the default spatial relation and default PL-RS may be a TCI state or QCL assumption for a CORESET having the lowest CORESET ID in the active DL BWP. When CORESETs are not configured for an active DL BWP on a CC, the default spatial relation and default PL-RS may be an active TCI state having the lowest ID for a PDSCH in the active DL BWP.

In Rel. 15, a spatial relation for a PUSCH scheduled by DCI format 0_0 is in accordance with a spatial relation for a PUCCH resource having the lowest PUCCH resource ID out of active spatial relations for a PUCCH on the same CC. A network needs to update PUCCH spatial relations on all SCells even when the PUCCH is not transmitted on SCells.

In Rel. 16, a PUCCH configuration for the PUSCH scheduled by DCI format 0_0 is unnecessary. The default spatial relation and default PL-RS are applied to the PUSCH scheduled by DCI format 0_0.

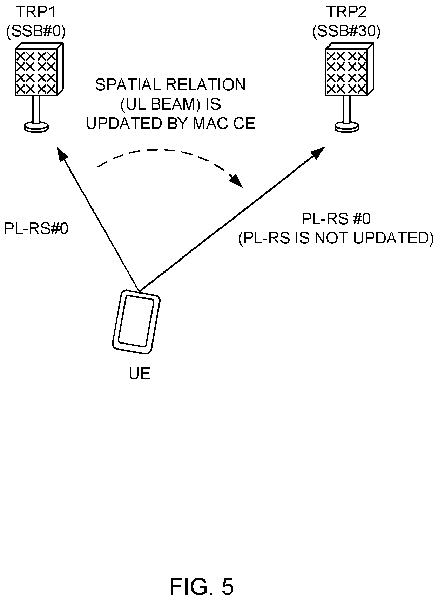

For accurate pathloss measurement for transmit power control, up to four PL-RSs are configured for the UE of Rel. 15 by RRC signaling. As shown in FIG. 5, even when a UL beam (spatial relation) is updated by a MAC CE, the PL-RS cannot be updated by the MAC CE.

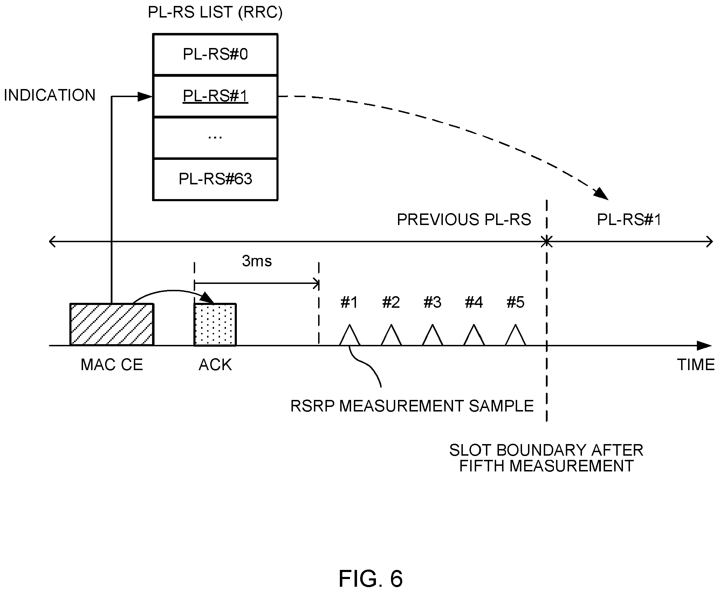

As shown in FIG. 6, for the UE of Rel. 16, up to 64 PL-RSs are configured by RRC signaling and one PL-RS is indicated (activated) by the MAC CE. The UE is required to track up to four active PL-RSs for all UL channels (SRSs, PUCCHs, and PUSCHs). Tracking the PL-RS may be calculating a pathloss based on PL-RS measurement to retain (store) the pathloss.

For the pathloss calculation, higher layer filtered RSRP (average of a plurality of times of RSRP measurement) is used. As shown in FIG. 6, when the PL-RS is updated by the MAC CE (when PL-RS #1 different from a PL-RS (previous PL-RS) used for the pathloss calculation in a PL-RS list configured by RRC is indicated by the MAC CE), by assuming the first RSRP measurement instance after 3 ms from transmission of ACK to the MAC CE to be the first RSRP measurement sample, PL-RS #1 may be applied to a slot boundary after the fifth RSRP measurement sample (may be used for the pathloss calculation).

In the present disclosure, RSRP measurement, an RSRP measurement sample, an RSRP measurement resource, RSRP measurement timing, an RSRP measurement instance, a PL-RS measurement sample, a PL-RS measurement resource, PL-RS measurement, PL-RS measurement timing, and a PL-RS measurement instance may be interchangeably interpreted.

When a TCI state for a PDCCH or PDSCH is updated by the MAC CE, the PL-RS is also updated to the TCI state. When the UE applies the default spatial relation and default PL-RS, how to apply the updated PL-RS is indefinite. Measurement for the higher layer filtered RSRP requires time, and thus the updated PL-RS cannot be applied immediately after the update of the TCI state.

Thus, the inventors of the present invention came up with the idea of a method for appropriately determining the PL-RS even when a spatial relation for the PL-RS is not configured.

Hereinafter, embodiments according to the present disclosure will be described in detail with reference to the drawings. The radio communication methods according to respective embodiments may each be employed individually, or may be employed in combination.

In the present disclosure, a cell, a CC, a carrier, a BWP, and a band may be interchangeably interpreted. In the present disclosure, an index, an ID, an indicator, and a resource ID may be interchangeably interpreted.

In the present disclosure, a TCI state, QCL assumption, a QCL parameter, a spatial domain reception filter, a UE spatial domain reception filter, a UE receive beam, a DL receive beam, DL precoding, a DL precoder, a DL-RS, an RS of QCL type D for a TCI state or QCL assumption, and an RS of QCL type A for a TCI state or QCL assumption may be interchangeably interpreted. In the present disclosure, the RS of QCL type D, a DL-RS associated with QCL type D, a DL-RS having QCL type D, a DL-RS source, an SSB, and a CSI-RS may be interchangeably interpreted.

In the present disclosure, a spatial relation, spatial relation information, spatial relation assumption, a QCL parameter, a spatial domain transmission filter, a UE spatial domain transmission filter, a UE transmit beam, a UL transmit beam, UL precoding, a UL precoder, an RS with a spatial relation, a DL-RS, QCL assumption, an SRI, a spatial relation based on the SRI, and a UL TCI may be interchangeably interpreted.

In the present disclosure, a TRS, a tracking CSI-RS, a CSI-RS having TRS information (higher layer parameter trs-Info), and an NZP-CSI-RS resource in an NZP-CSI-RS resource set having the TRS information may be interchangeably interpreted.

In the present disclosure, DCI format 0_0, DCI not including an SRI, DCI not including an indication of a spatial relation, and DCI not including a CIF may be interchangeably interpreted. In the present disclosure, DCI format 0_1, DCI including an SRI, DCI including an indication of a spatial relation, and DCI including a CIF may be interchangeably interpreted.

In the present disclosure, a dedicated PUCCH and a PUCCH based on a dedicated PUCCH configuration (PUCCH-Config) may be interchangeably interpreted. In the present disclosure, a dedicated SRS and an SRS based on a dedicated SRS configuration (SRS-Config) may be interchangeably interpreted.

### (Radio Communication Method)

In the present disclosure, a specific UL signal and a UL signal of a specific type may be interchangeably interpreted. The specific UL signal may be at least one of a PUCCH (dedicated PUCCH), an SRS (dedicated SRS), a PUSCH scheduled by DCI format 0_1, and a PUSCH scheduled by DCI format 0_0.

In the present disclosure, a specific DL signal, a DL signal of a specific type, a specific DL channel, and a DL channel of a specific type may be interchangeably interpreted. The DL signal may be at least one of a PDCCH, a PDSCH, and a CORESET.

### <Embodiment 1>

When a configuration related to a spatial relation and PL-RS for a specific UL signal satisfies an application condition and a TCI state for a specific DL signal is updated by a MAC CE, a PL-RS application timeline may be applied to default assumption (default PL-RS) for the PL-RS for the specific UL signal. The application condition may be based on at least one of Embodiments 1, 3, and 5.

A combination of the specific UL signal and the application condition for the specific UL signal may be at least one of the following specific UL signals 1 to 4.

### {Specific UL Signal 1}

The specific UL signal is a dedicated PUCCH. The application condition is a case that both the spatial relation and PL-RS are not configured for the specific UL signal.

### {Specific UL Signal 2}

The specific UL signal is a dedicated SRS. The application condition is a case that both the spatial relation and PL-RS are not configured for the specific UL signal.

### {Specific UL Signal 3}

The specific UL signal is a PUSCH scheduled by DCI format 0_0. The application condition is a case that a PUCCH resource configuration for the specific UL signal is absent on an active UL BWP or a case that an active spatial relation for the specific UL signal on a PUCCH resource on the active UL BWP is absent.

### {Specific UL Signal 4}

The specific UL signal is a PUSCH scheduled by DCI format 0_1. The application condition is a case that a corresponding SRS resource (SRS resource indicated by an SRI) does not include the spatial relation and PL-RS for the specific UL signal.

When CORESETs are configured for an active DL BWP on a CC for the specific DL signal, the TCI state for the specific DL signal may be a TCI state for a PDCCH. When CORESETs are not configured for an active DL BWP on a CC for the specific DL signal, the TCI state for the specific DL signal may be a TCI state for a PDSCH.

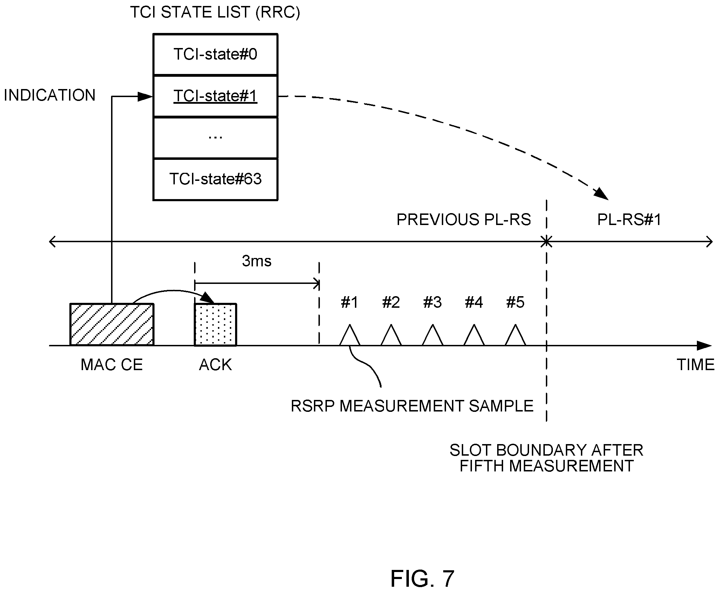

In the PL-RS application timeline, until timing of application (timing) of the default PL-RS, a filtered RSRP value based on a PL-RS previous to the default PL-RS may be used for pathloss calculation. In the PL-RS application timeline, from the timing of application of the default PL-RS, a filtered RSRP value based on the default PL-RS may be used for the pathloss calculation. For example, as shown in FIG. 7, by assuming the first RSRP measurement instance after 3 ms from transmission of acknowledgement (ACK or positive acknowledgment) to the MAC CE to update the TCI state to be the first RSRP measurement sample, the timing of application of the default PL-RS may be a slot followed by the n-th RSRP measurement sample (slot boundary after the n-th RSRP measurement sample). For example, n may be 5. Note that an RSRP measurement resource for the previous PL-RS and an RSRP measurement resource for the updated PL-RS (default PL-RS or PL-RS #1) may be different from each other, and an RSRP measurement sample illustrated in FIG. 7 may mean the RSRP measurement resource for PL-RS #1.

The PL-RS application timeline may be applied to only a UE to support, with respect to a total number of RSs RRC-configured for a PL-RS and an RS for the TCI state for the specific DL signal, the total number greater than 4. The PL-RS application timeline may be applied only when a PL-RS activated by the MAC CE is not tracked.

When at least one of the number of PL-RSs to be configured and the number of TCI states configured for the specific DL signal is greater than 4, the UE may be required to track the activated PL-RS.

Whether the UE updates the filtered RSRP value for the previous PL-RS after 3 ms from transmission of ACK to the MAC CE to update the TCI state may depend on the UE (UE implementation).

According to Embodiment 1, the UE can appropriately apply the default PL-RS.

### <Embodiment 2>

When both a spatial relation and PL-RS are not configured for a specific UL signal and a TCI state for a specific DL signal is updated by a MAC CE, a spatial relation application timeline may be applied to default assumption (default spatial relation) for a spatial relation for the specific UL signal. A PL-RS application timeline may be the same as that of Embodiment 1. The spatial relation application timeline may be either of the following spatial relation application timelines 1 and 2.

### {Spatial Relation Application Timeline 1}

The spatial relation application timeline may be the same as the PL-RS application timeline. Timing of switching from a previous spatial relation to the default spatial relation may be the same as timing of switching from a previous PL-RS to a default PL-RS.

According to spatial relation application timeline 1, the spatial relation and PL-RS can always be the same.

### {Spatial Relation Application Timeline 2}

The spatial relation application timeline may be different from the PL-RS application timeline. Timing of application of the default spatial relation may be earlier than timing of application of the default PL-RS. For example, the timing of application of the default spatial relation may be timing after 3 ms from transmission of ACK to the MAC CE to update the TCI state.

According to spatial relation application timeline 2, the spatial relation (UL beam) can be switched earlier than the PL-RS is switched.

### <Embodiment 3>

When at least one of the following higher layer parameters 1 to 3 is configured (enabled), at least one of a PL-RS application timeline (Embodiment 1) and a spatial relation application timeline (Embodiment 2) may be applied.

### {Higher Layer Parameter 1}

Information about enabling of a default beam pathloss for a PUSCH scheduled by DCI format 0_0 (enableDefaultBeamPlForPUSCH0_0).

### {Higher Layer Parameter 2}

Information about enabling of a default beam pathloss for a dedicated PUCCH (enableDefaultBeamPlForPUCCH).

### {Higher Layer Parameter 3}

Information about enabling of a default beam pathloss for at least one of a dedicated SRS and a PUSCH scheduled by DCI format 0_1 (enableDefaultBeamPlForSRS) .

The PL-RS application timeline may be applied to a specific UL signal corresponding to the configured higher layer parameter.

According to Embodiment 3, the PL-RS application timeline can be appropriately configured for a UE.

### <Embodiment 4>

When a UE has already tracked an updated PL-RS (when the UE has already used the updated PL-RS for pathloss calculation), the UE may apply either of the following PL-RS application timelines 1 and 2. The updated PL-RS may be a default PL-RS, or may be a PL-RS updated by a MAC CE.

{PL-RS Application Timeline 1}

The UE may apply the updated PL-RS when the MAC CE for update updates a TCI state.

For example, timing of the application may be timing after 3 ms from transmission of ACK to the MAC CE to update the TCI state.

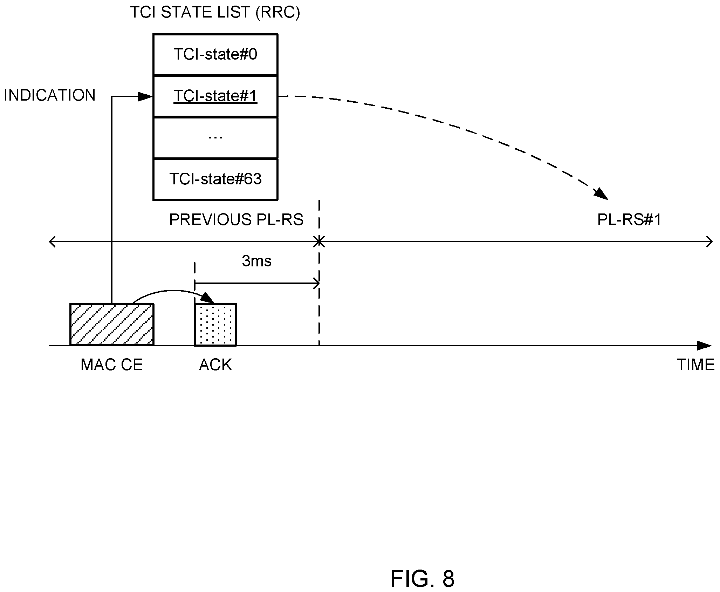

In an example of FIG. 8, the UE tracks four PL-RSs before the MAC CE, and the four PL-RSs are assumed to be SSBs #0, #1, #2, and #3. Here, TCI state #1 is indicated for the UE by the MAC CE. An RS of QCL type A and RS of QCL type D in TCI state #1 are TRS #1, and TRS #1 is QCLed with SSB #1. The UE has already tracked SSB #1 corresponding to TCI state #1, and thus applies SSB #1 as the PL-RS after 3 ms from transmission of ACK to the MAC CE.

For example, timing of the application may be timing after specific time from transmission of ACK to the MAC CE to update the TCI state. For example, the specific time may be a fixed value (for example, 3 ms) + PL-RS update offset. The PL-RS update offset may be defined in specifications. The PL-RS update offset may be expressed by time in units of ms, or may be expressed by the number of symbols.

According to PL-RS application timeline 1, the timing of application of the PL-RS can be brought forward.

### {PL-RS Application Timeline 2}

The UE may apply the updated PL-RS in accordance with the PL-RS application timeline of Embodiment 1 (for example, FIG. 7 mentioned above).

According to PL-RS application timeline 2, an impact on the specifications is smaller, and complexity of the UE is lower. When an actual use case in which four or less TCI states are configured is not used, this use case may not necessarily be considered.

A case where the updated PL-RS has already been tracked may be a case where filtered RSRP has already been calculated on the basis of the updated PL-RS, or may be a case after a slot followed by m times of RSRP measurement after the PL-RS is updated by the MAC CE or RRC.

The number (n or m) of samples of RSRP measurement of the PL-RS may be the sum of the number of samples of an SSB configured for the PL-RS and the number of samples of a CSI-RS (for example, a TRS) being in a QCL relationship with the SSB, or may be the number of samples of an SSB not including the number of samples of a CSI-RS (for example, a TRS) being in a QCL relationship with the SSB.

When the PL-RS is a CSI-RS (for example, a TRS) being in a QCL relationship (quasi co-located) with an SSB, the UE may measure RSRP (pathloss) by using the CSI-RS, or may measure RSRP (pathloss) by using the SSB being in the QCL relationship with the CSI-RS.

A QCL configuration for a TRS and PDCCH in a plurality of CCs will be described.

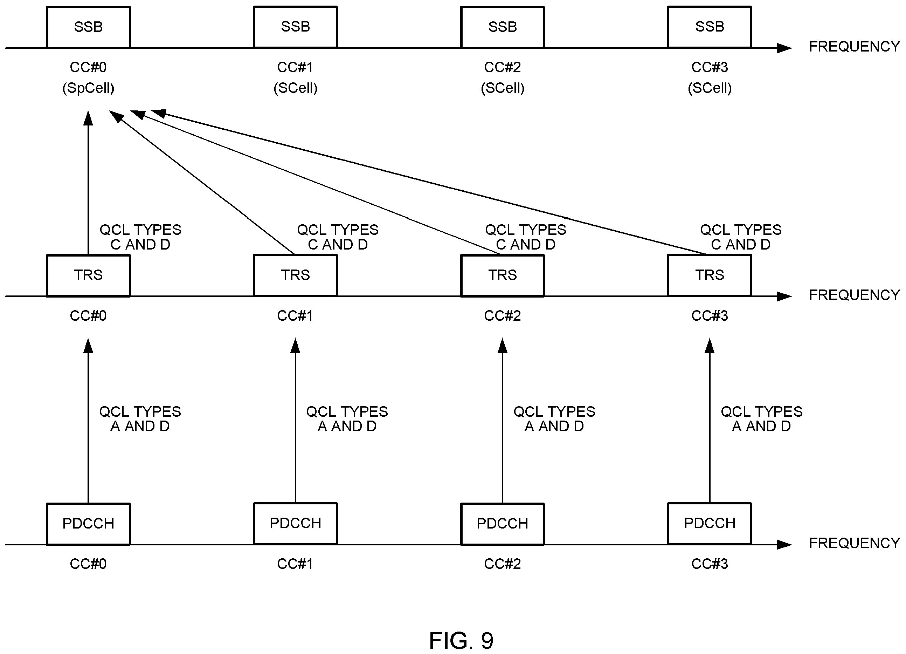

For example, a configuration such as that shown in FIG. 9 is possible. It is assumed that CC #0 being a special cell (SpCell) (primary cell (PCell)) or primary secondary cell (PSCell) and CCs #1, #2, and #3 being SCells are configured and an SSB, a TRS, and a PDCCH are transmitted in each CC. In this case, the TRS of each CC is in relationships of QCL types C and D with an SSB of CC #0, and the PDCCH of each CC is in relationships of QCL types A and D with a TRS of the same CC.

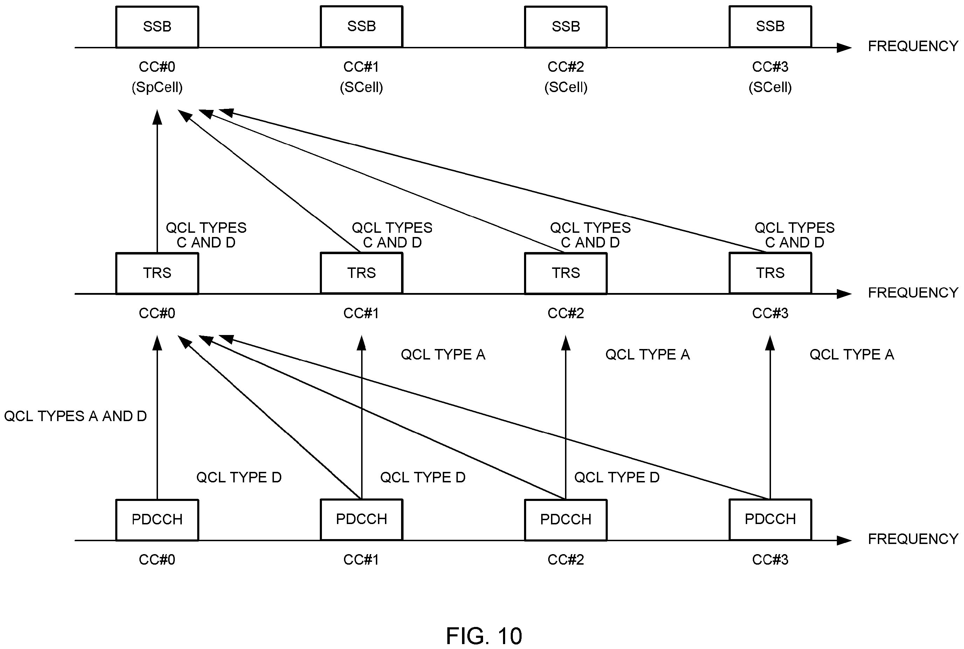

For example, a configuration such as that shown in FIG. 10 is impractical. Similarly to FIG. 9 mentioned above, when the TRS of each CC is in relationships of QCL types C and D with an SSB of CC #0 and the PDCCH of each CC is in a relationship of QCL type A with a TRS of the same CC, PDCCHs of CC #1, #2, and #3 cannot be in a relationship of QCL type D with a TRS of CC #0. When a TCI state for the PDCCH is the TRS, the RS of QCL type A and the RS of QCL type D are required to be the same TRS.

According to Embodiment 4, the UE can appropriately apply the updated PL-RS even when the updated PL-RS has already been tracked.

### <Embodiment 5>

Whether at least one of the PL-RS application timeline and the spatial relation application timeline in any one of Embodiments 1 to 4 is applied may be based on at least one of a frequency range (FR) and subcarrier spacing (SCS) for a specific UL signal. A condition for the application may include at least one of the following conditions 1 to 6. In other words, the application condition may be a logical product of the application condition of Embodiment 1 and at least one of the following conditions 1 to 6.

### {Condition 1}

At least one of the PL-RS application timeline and the spatial relation application timeline may be applied to only a specific frequency range. The specific frequency range may be FR2, may be a frequency range other than FR1, or may be at least one of FR2, FR3, and FR4.

According to condition 1, when the UE supports only one UL beam in FR1, a UE operation can be simplified.

### {Condition 2}

At least one of the PL-RS application timeline and the spatial relation application timeline may be applied to FR1 and FR2, or may be applied regardless of frequency ranges.

According to condition 2, the same timeline is applied to different frequency ranges, thereby allowing the UE operation to be simplified.

### {Condition 3}

The PL-RS application timeline may be applied to a second frequency range, and a PL-RS application timeline for a first frequency range different from the PL-RS application timeline may be applied to the first frequency range. The first frequency range may be FR1. The second frequency range may be FR2, may be a frequency range other than FR1, or may be at least one of FR2, FR3, and FR4.

For example, the PL-RS application timeline for the first frequency range may be similar to PL-RS application timeline 1 of Embodiment 5. For example, time from a MAC CE to application of the PL-RS in FR1 may be shorter than that in FR2.

According to condition 3, time is necessary for processing such as beam management in FR2, and thus the time in FR1 can be shortened.

### {Condition 4}

At least one of the PL-RS application timeline and the spatial relation application timeline may be applied to only specific SCS. The specific SCS may be 60 kHz or more.

### {Condition 5}

At least one of the PL-RS application timeline and the spatial relation application timeline may be applied regardless of SCS.

### {Condition 6}

The PL-RS application timeline may be applied to second SCS, and a PL-RS application timeline for first SCS different from the PL-RS application timeline may be applied to the first SCS. The first SCS may be 15 kHz and 30 kHz. The second SCS may be 60 kHz or more.

According to Embodiment 5, it is possible to use an appropriate timeline on the basis of frequency ranges or SCS.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

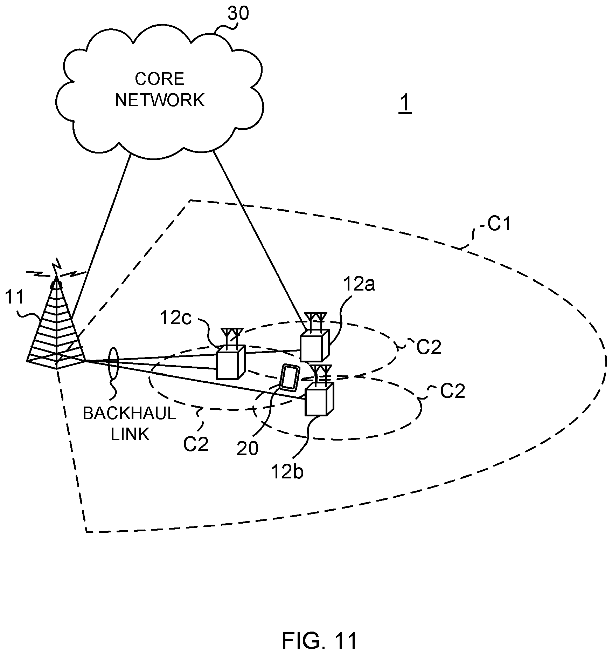

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

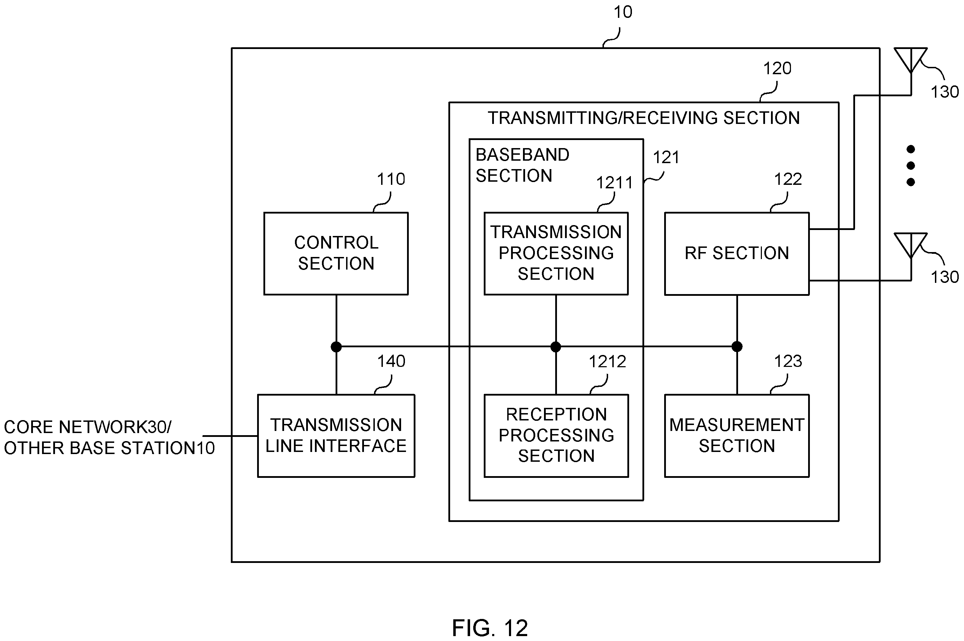

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a medium access control-control element (MAC CE) to update a transmission configuration indication (TCI) state. When a configuration related to at least one of a spatial relation and a pathloss reference signal for a specific uplink signal satisfies an application condition, the transmitting/receiving section 120 may receive the specific uplink signal based on a pathloss using the TCI state from timing after transmission of a positive acknowledgment (ACK) to the MAC CE.

### (User Terminal)

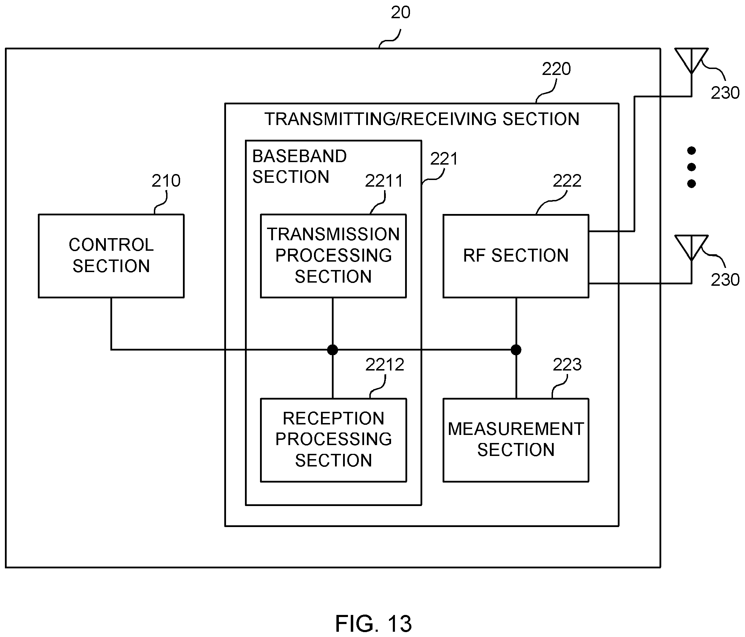

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a medium access control-control element (MAC CE) to update a transmission configuration indication (TCI) state. When a configuration related to at least one of a spatial relation and a pathloss reference signal for a specific uplink signal satisfies an application condition, the control section 210 may use the TCI state for the pathloss reference signal from timing (application timing) after transmission of a positive acknowledgment (ACK) to the MAC CE.

The application condition may be at least one of a case that both a spatial relation and a pathloss reference signal for the specific uplink signal are not configured, a case that a physical downlink control channel (PUCCH) resource configuration is absent on an active uplink bandwidth part (BWP), a case that an active spatial relation on a PUCCH resource on an active uplink BWP is absent, and a case that a sounding reference signal (SRS) resource corresponding to the specific uplink signal does not include a spatial relation and a PL-RS.

The control section 210 may use the TCI state for the spatial relation for the specific uplink signal from the timing.

When the TCI state has already been used for pathloss calculation (when the control section has already tracked the TCI state), the control section 210 may use the TCI state for the pathloss reference signal from second timing different from the timing.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

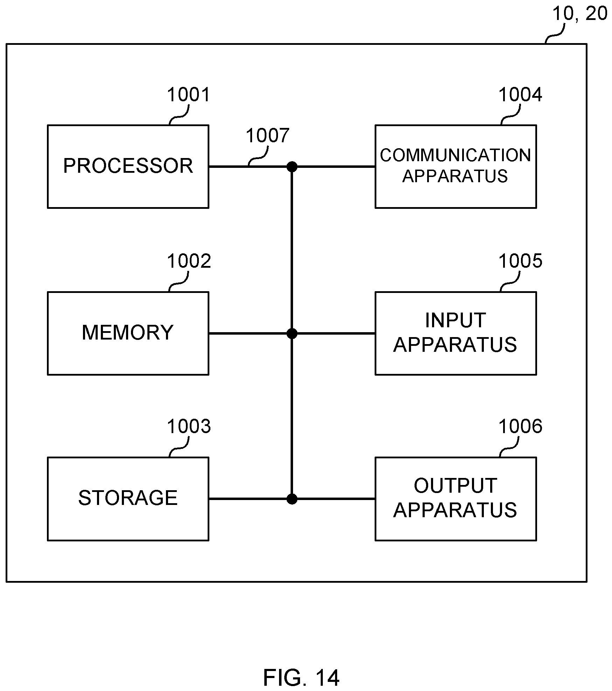

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a medium access control-control element (MAC CE) to update a transmission configuration indication (TCI) state; and
a control section that, when a configuration related to at least one of a spatial relation and a pathloss reference signal for a specific uplink signal satisfies an application condition, uses the TCI state for the pathloss reference signal from timing after transmission of a positive acknowledgment (ACK) to the MAC CE.

2. The terminal according to claim 1, wherein
the application condition is at least one of a case that both a spatial relation and a pathloss reference signal for the specific uplink signal are not configured, a case that a physical downlink control channel (PUCCH) resource configuration is absent on an active uplink bandwidth part (BWP), a case that an active spatial relation on a PUCCH resource on an active uplink BWP is absent, and a case that a sounding reference signal (SRS) resource corresponding to the specific uplink signal does not include a spatial relation and a PL-RS.

3. The terminal according to claim 1 or 2, wherein
the control section uses the TCI state for the spatial relation for the specific uplink signal from the timing.

4. The terminal according to any one of claims 1 to 3, wherein
when the TCI state has already been used for pathloss calculation, the control section uses the TCI state for the pathloss reference signal from second timing different from the timing.

5. A radio communication method of a terminal, the radio communication method comprising:
receiving a medium access control-control element (MAC CE) to update a transmission configuration indication (TCI) state; and
using, when a configuration related to at least one of a spatial relation and a pathloss reference signal for a specific uplink signal satisfies an application condition, the TCI state for the pathloss reference signal from timing after transmission of a positive acknowledgment (ACK) to the MAC CE.

6. A base station comprising:
a transmitting section that transmits a medium access control-control element (MAC CE) to update a transmission configuration indication (TCI) state; and
a receiving section that, when a configuration related to at least one of a spatial relation and a pathloss reference signal for a specific uplink signal satisfies an application condition, receives the specific uplink signal based on a pathloss using the TCI state from timing after transmission of a positive acknowledgment (ACK) to the MAC CE.
